# EUROPÄISCHE PATENTSCHRIFT

(11) **EP 1 709 640 B1**
(45) Veröffentlichungstag und Bekanntmachung des Hinweises auf die Patenterteilung: **01.07.2009**
(21) Anmeldenummer: 04706672.5
(22) Anmeldetag: 30.01.2004
(51) Int. Cl.: G11B 27/038, H04N 1/21

(54) **VERFAHREN UND VORRICHTUNG ZUR STEUERUNG EINES TONFOLGE GEKOPPELTEN BILDFOLGEABLAUFS SOWIE ZUGEH RIGES PROGRAMM**
METHOD AND DEVICE FOR CONTROLLING AN IMAGE SEQUENCE RUN COUPLED TO AN AUDIO SEQUENCE AND CORRESPONDING PROGRAMME
PROCEDE ET DISPOSITIF DE COMMANDE D'UNE SEQUENCE D'IMAGES COUPLEE A UNE SEQUENCE DE SONS ET PROGRAMME CORRESPONDANT

(30) Priorität: 31.01.2003 DE 10304098
(43) Veröffentlichungstag der Anmeldung: 11.10.2006
(73) Patentinhaber: Trivid GmbH, 72135 Dettenhausen (DE)
(72) Erfinder: KILIAN, Ulrich, A-8020 Graz (AT)
(74) Vertreter: Wächter, Jochen
(86) Internationale Anmeldenummer: PCT/EP2004/000825
(87) Internationale Veröffentlichungsnummer: WO 2004/068495

(56) Entgegenhaltungen:
- WO-A-92/12508
- WO-A-94/22128
- US-A- 6 078 005

## Beschreibung

Die vorliegende Anmeldung beansprucht die Priorität der deutschen Patentanmeldung 103 04 098.6, hinterlegt am 31.01.2003, deren Offenbarungsgehalt hiermit ausdrücklich auch zum Gegenstand der vorliegenden Anmeldung gemacht wird.

### Gebiet der Erfindung

Die Erfindung betrifft ein Verfahren zur Steuerung eines Tonfolge gekoppelten Bildfolgeablaufs zur Wledergabe mittels eines Bild- und Tonwiedergabegeräts, bei dem In einer den Bediener führenden Form die für den Ablauf einer vertonten Bildfolge benötigten Tonfolgen und Bilder über eine Eingabeeinheit In eine Datenspeichereinheit eingegeben und miteinander gekoppelt werden, nach dem Oberbegriff des Anspruches 1. Ferner betrifft die Erfindung ein Computer Programm produkt nach Anspruch 17.

### Stand der Technik

Die Aufnahme oder Erzeugung von Bildern und Ihre Darstellung auf einem Bildwiedergabegerät wie beispielsweise das Fotografieren mit einer Digitalkamera. Einlesen der Bildsignaldaten in einen Computer und anschließende Darstellung, gegebenenfalls nach Nachbearbeitung des Materiales, ist hinlänglich bekannt und wurde auch bereits dahingehend weiterentwickelt, dass die Präsentation der Bildsignaldaten mit Ton hinterlegt werden kann.

Die DE 101 58 829 A1 (nachveröffentlicht) beschreibt ein tragbares Bildsignalbearbeitungsgerät, also eine Vorrichtung, mittels derer Bildsignaldaten auf einfache Weise verändert und einem Publikum präsentiert werden können. Dabei ist es möglich, das Bild mit einem Tonsignal zu hinterlegen. Dazu wurde ein stets mitzuführendes Gerät geschaffen, welches eigens vorgesehene Datenträgerzuführschlitze aufweist und mit einem Bild- (und Ton)-wiedergabegerät verbunden werden muss.

Eine ähnliche Thematik gibt die EP 0 756 236 B1 wieder, die ein Editiersystem für Audio und Video beschreibt. Hierin wird die Problematik der Zeitverzögerung gelöst, die auftritt, wenn ein Programm auf Bilddaten zugreift, die gleichzeitig mit einem Ton unterlegt werden sollen. Es handelt sich also um eine Vorrichtung zur Synchronisation.

Die DE 101 33 333 C1 dient zum Erkennen bestimmter Tonfolge anhand bestimmter Charakteristika. An Hand weniger Takte einer Melodie lässt sich die gesamte Melodie erkennen, ohne dass eine Verknüpfung mit Bildern erfolgt.

Die WO 94/22128 ist auf ein grafisches Sount-to-Light-System gerichtet, bei dem in Echtzeit basierend auf einem Audio-Datenstrom Video-Eingangssignale gemäß den physikalischen Eigenschaften des Audio-Datenstrom verarbeitet und ausgegeben werden. Dabei entstehen Video-Ausgabesignale, die separat vom Audio-Datenstrom, allerdings synchron, dargestellt werden. Audio-Datenstrom und Video-Ausgabesignal können nach bekannten Techniken verbunden werden - auf die Koppelung der Video- und Audio-Signale hat der Anwender jedoch keinen Einfluss. Die Koppelung erfolgt immer auf dieselbe Art und Weise je nach Voreinstellung der Steuerungssoftware. Anwender ist der Disc-Jockey, der die gesamte Audio- und Videoanlage bedient und bestrebt ist, seinem Publikum mittels möglichst auffälliger Videoeffekte in Echtzeit seine Musik unabhängig von den dargestellten Bildern näher zu bringen.

Auch automatische Bildabläufe - wie sogenannte Videoclips - sind bekannt, bei denen ein Kurzfilm oder mehrere kurze Filmsequenzen zeitaufwändig aneinander geschnitten und mit Ton hinterlegt werden. Die Problematik bei der Erstellung solcher Bildabläufe liegt darin, dass das Rohmaterial zur synchronen Präsentation von Bild- und Tonsignalen jedoch eine kosten- und arbeitsintensive Bearbeitung bedingt. Für Präsentationen in der Wissenschaft oder für Werbezwecke werden häufig Darstellungsformen verwendet, bei denen von einem mechanisch gesteuerten Bildablauf gesprochen wird.

Die Bildabläufe beinhalten zwar Techniken wie die der Überblendung, insgesamt wird Jedoch keine fließende Bildfolge erzielt, sondern es wird - vergleichbar mit einer Diashow - weitergeschaltet von einem Bild zum nächsten. Mit den vorliegenden Technologien können mit Hilfe von digitalen Büdaufnahmegeräten in Sekundenschnelle Bilder von hoher Qualität erzeugt und mittels eines Wiedergabegeräts wie Computer, Fernsehapparat oder auch Mobiltelefon abgerufen werden.

Das Bildmaterial jedoch spontan in eine Präsentation so einzubinden, dass aus einem vorliegenden Bildersortiment ein fließender Bildablauf entsteht, der mit einer ebenso fließenden Tonabfolge hinterlegt wird, die beispielsweise aus sprachlichen oder musikalischen Ausschnitten unterschiedlicher Quellen stammt, ist einem Lalenanwender bislang nicht möglich.

### Zusammenfassung der Erfindung

Ausgehend von diesem Stand der Technik liegt der vorliegenden Erfindung die Aufgabe zugrunde, es einem Anwender ohne Fachkenntnis zu ermöglichen, aus einem Sortiment an Bildern und Tonfolgen einen dynamischen Bildfolgeablauf mit Unteriegung durch einen Tonfolgeablauf zu erstellen.

Diese Aufgabe wird durch ein Verfahren mit den Merkmalen des Anspruchs und ein computer Programm produkt mit den Merkmalen des Anspruches 17 gelöst.

Aus einer Anzahl unabhängiger Bilder wird dabei ein Bildfolgeablauf erzeugt, der mit Musik oder gesprochenem Text, also einer sogenannten Tonfolge, gekoppelt ist. Die durch dieses Verfahren geschaffene Aufbereitung des Ton- und Bildmaterials gibt dem Anwender die Möglichkeit, einen Bildfolgeablauf zu erzeugen und zu vertonen, und später mit Hilfe eines Bild- und Tonwledergabegeräts, wie beispielsweise einem Computer, einem Mobiltelefon, oder einem Fernsehapparat wiederzugeben. Der Anwender wird auf ansprechende Weise durch ein Menü geführt, das so aufgebaut ist, dass er zunächst ein Softwareprogramm zum Aufrufen der abgelegten Bilder und Tonfolgen in der gewünschten Abfolge auf dem gewünschten Datenverarbeitungsmedium ablegt und speichert, mit dem er das für die vertonte Bildfolge benötigte Tonfolgenmaterial sowie die Bilder über eine Eingabeeinhelt in eine Datenspeichereinheit eingeben und verarbeiten kann. Mit dem vorliegenden Softwareprogramm hat der Anwender die Möglichkeit, durch einfaches Auswählen eine Tonfolge oder auch Übergänge zu selektieren, die dann der Bildfolge zugrunde gelegt werden. Wenn dabei bestimmte, im Softwareprogramm definierte oder vom Benutzer selektierte Bedingungen sich im Tonmaterial ändern, wird der Übergang von einem Bild zum nächsten bewirkt.

Umgekehrt kann ebenso verfahren werden: Der Anwender sucht eine bereits vorliegende Bildfolgedatei aus, und ordnet ihr eine Tonfolge zu. D.h., dass bei der Änderung bestimmter Parameter, die ein Bild beschreiben, eine vorher festgelegte Änderung der Tonfolge stattfindet.

Vorzugsweise wählt der Anwender nicht aktiv zu einem gewünschten Bilderfile oder Tonfolgefile das Ton- bzw. Bildmaterial aus, welches er zugrunde legen möchte, sondern er setzt durch einfaches Anklicken einen Suchalgorithmus in Gang, der ihm entsprechendes Bild- oder Tonfolgematerial anbietet, was vorgegebenen Suchkriterien entspricht. Hiermit kann der Anwender ohne kosten- oder zeitintensive Arbeitsschritte in allerkürzester Zeit aus einer beliebigen Anzahl von Bildern, oder aus einer beliebig langen Tonfolge, wie beispielweise einer Rede oder einem Musikstück, eine fließende, harmonische, vertonte Bildabfolge herstellen.

Weitere Vorteile ergeben sich aus den Unteransprüchen.

### Kurzbeschreibung der Figuren

Im Folgenden wird die Erfindung an Hand eines Ausführungsbeispiels an Hand der beigefügten Figuren näher erläutert. Es zeigen:
- Fig. 1: einen vereinfachten Verfahrensablauf aus Sicht des Anwenders
- Fig. 2: einen umfangreicheren Verfahrensablauf aus Sicht des Anwenders

### Ausführliche Beschreibung bevorzugter Ausführungsbeispiele

Die Erfindung wird nachfolgend beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Das vorliegende Verfahren beschreibt die Steuerung eines tonfolgegekoppelten Bildfolgeablaufs. Der Bildfolgeablauf kann mit Hilfe eines Bild- und Tonwiedergabegeräts wie z.B. mittels eines Mobiltelefon, eines Computer oder eines Fernsehgeräts abgespielt werden. Dazu installiert der Anwender zunächst die Software, die diesem Verfahren zugrunde liegt, auf einem entsprechenden datenverarbeitenden Gerät. Die Installation erfordert keine weiteren Kenntnisse als das Verbinden des entsprechenden datenverarbeitenden Geräts mit dem Datenträger, der die betreffende Software enthält. Menü geführt erfährt der Anwender den nächsten Schritt, den er zum Ablegen und Speichern des interessierenden Bild- und Tonmaterials tun muss. Wenn Bilder und Tonmaterial erfolgreich gespeichert sind, braucht der Anwender nur noch eine Datei, die eine Tonfolge enthält, auszuwählen, und diese einer Bildfolge zugrunde zu legen bzw. zuzuordnen.

Vorzugsweise ist die Software so gestaltet, dass in dem ausgewählten Tonmaterial definierte Bedingungen selbsttätig erkannt werden, und, wenn diese sich ändern, der Übergang eines Bildes in das Nächste bewirkt wird oder zumindest dieser Übergang dem Benutzer zur Auswahl vorgeschlagen wird. Analog geht der Anwender vor, wenn er auf eine bereits vorliegende, zu irgendeinem früheren Zeitpunkt abgespeicherte Bildfolgedatei zurückgreifen möchte, und dieser eine neu aufgenommene Tonfolge zugrunde legen will. So entsteht bei dieser Vorgehensweise ein Archiv, in dem Bildersätze und Tonfolgen gespeichert sind. Einer Tonfolge kann damit jederzeit eine beliebige Bildfolgedatei zugeordnet werden. Auch der umgekehrte Vorgang ist möglich.

Wenn der Anwender nicht selbst aktiv entscheiden möchte, welche Bildfolgedatei er einer bestimmten Tonfolgedatei zuordnet, kann er im bevorzugten Ausführungsbeispiel einen Suchalgorithmus durch einfachen Knopfdruck in Gang setzen. Nach vorgegebenen Suchkriterien werden dann die im Archiv vorliegenden Bilder bzw. Tonfolgesätze geprüft, und diejenigen, die den ausgewählten Suchkriterien entsprechen, werden dem Anwender zur Auswahl angeboten, so dass er durch einen einfachen Zuordnungsvorgang einen vertonten Bildfolgeablauf erreicht.

Eine Tonfolge kann auf unterschiedliche Weise erzeugt werden:

So ist eine vokalerzeugte Tonfolge, wie beispielsweise eine Rede, ein Gespräch, ein Dialog oder ein Lied ebenso als Tonfolge verwendbar wie ein instrumentiertes oder elektronisch erzeugtes Musikstück. Der Ablauf der Bildfolge kann dabei zeitgesteuert erfolgen, d.h., dass der Wechsel von einem Bild zum Nächsten durch ein im Bedienmenü einzugebendes Zeitintervall gesteuert wird, oder dass die Ablaufsteuerung automatisch durch ein bereits vorgegebenes Zeitintervall erfolgt.

Vorzugsweise wird jedoch die Änderung eines Charakteristikums der Tonfolge erfasst, die, sofern diese einen gewissen Wert erreicht, den Übergang eines Bildes in das nächste nach sich zieht. Eine Tonfolgenänderung wird beispielsweise dadurch gekennzeichnet, dass das gesprochene Wort einer Frau eine andere Klangfarbe hat als die eines Mannes; dass Musikstücke beispielsweise in Gattungen unterschieden werden können, die sich wiederum durch verschiedene Rhythmen, Tempi, dynamische Angaben, metrische Angaben oder durch die Instrumentierung oder Tonhöhe ausweisen.

Diese Angaben, mit denen eine Tonfolge beschrieben werden kann, eignen sich auch zur Verwendung als Suchkriterien, nach denen die zur Verfügung stehenden Tonfiles vorzugsweise selbsttätig abgesucht werden. So können unterschiedlich charakterisierte Tonfolgen einen Tonfolgenablauf bilden. In einem bevorzugten Ausführungsbeispiel lassen sich so die Bilder, die mittels einer digitalen Kamera z.B. bei einem Kindergeburtstag aufgenommen worden sind, zu einem ansprechenden Clip zusammenstellen, in dem wenige Takte bekannter Kinderlieder zu einem lustigen Potpourri aneinandergereiht und mit der Bilderfolge gekoppelt werden.

Um einen ansprechenden Bildfolgeablauf zu präsentieren, kann der Anwender mit Hilfe des vorliegenden Menüs auf sogenannte Bildfolgeablaufmasken zurückgreifen. In diesen Masken ist festgelegt, auf welche Weise eine Folge von Bildern präsentiert wird, also z.B. ineinander übergeht:

Vorzugsweise wird auf zwei gestalterische Mittel zurückgegriffen. Zum Einen kann jedes Bild für sich bearbeitet werden. Es kann in verschiedene Bildsegmente unterteilt werden, die gemeinsam mit dem vollständigen Bild in unterschiedlichen wechselnden Effekten gezeigt werden. Es stehen dann z.B. Effekte wie das Ausblitzen eines Bildzentrums, Schattierung des Bildes vom linken zum rechten Bildrand und umgekehrt, eine scheinbare wellenförmige Bewegung, die durch das Bild geht, Fotoapparateffekte, und vieles mehr zur Verfügung. Das zweite gestalterische Mittel besteht im Übergang eines Bildmotivs in ein nächstes: Hierfür können bestimmte Animationseffekte herangezogen werden. So kann sich ein Bild aus einem Anderen herausentwickein, herausdrehen, oder aus einem anderen Bild entstehen. Diese beiden gestalterischen Mittel können auch miteinander kombiniert werden. So entsteht ein fließender Bildablauf mit attraktiven Effekten, der als sogenannte Maske in der zugrundeliegenden Software gespeichert ist.

Analog wird mit dem Tonmaterial verfahren: Auch hier können einzelne Musikstücke, Gespräche, Dialoge oder andere Geräusche gespeichert werden, die dann mittels einer Maske zu einem Tonfolgenablauf kombiniert werden. So kann in einem Ausführungsbeispiel ein Gespräch dezent ausgeblendet werden, es erklingt Musik, diese geht in sanftes Meeresrauschen über und endet mit einigen poppigen Akkorden. Hat der Anwender neue Bilder aufgenommen, beispielsweise mit einer digitalen Kamera, so kann er diese einfach unter einem Bilderfile abspeichern, und mit dem dargelegten Tonfolgenablauf verbinden. Analog kann der Anwender auch eine abgelegte Bilderabfolge, die er aus seinen Lieblingssommerurlaubsfotos erstellt hat, mit wechselnden neuen Sommerpophits unterlegen.

Die Präsentation der so erzeugten vertonten Bildabfolgen kann mit Hilfe eines Fernsehgeräts, eines Computers oder auch eines geeigneten Mobiltelefons erfolgen. Dies eröffnet die Möglichkeit, dass ein Partner seiner Partnerin via Telefon direkt Eindrücke von seinem gegenwärtigen Aufenthaltsort mit authentischer Geräuschkulisse übermitteln kann. Ein weiteres bevorzugtes Anwendungsbeispiel sind Produktpräsentationen, die einem überraschend hinzugekommenen, potentiellen Geschäftspartner gezeigt werden sollen, oder Verfahrensabläufe in einer Industrieanlage, die einem neuen Mitarbeiter rasch und überzeugend nahe gebracht werden sollen. Auch die Gestaltung attraktiver und kreativer Internetauftritte wird mit dem dargelegten Verfahren zeit- und kostensparend realisiert. Wenn die Aufnahme der benötigten Bilder mittels digitaler Kamera, Videokamera oder einem geeigneten Mobiltelefon erfolgt ist, lassen sich die zugrunde zu legenden Tonfolgen, respektive Geräusche, Gespräche, oder Naturklänge, direkt parallel zur Bildaufnahme durchführen. Die Übertragung der Software, die das Programm zur Steuerung des Tonfolge gekoppelten Ablaufs enthält, erfolgt im bevorzugten Ausführungsbeispiel mittels CD-Rom geeigneten Datenübertragungschips, Disketten oder anderen Datenträgern.

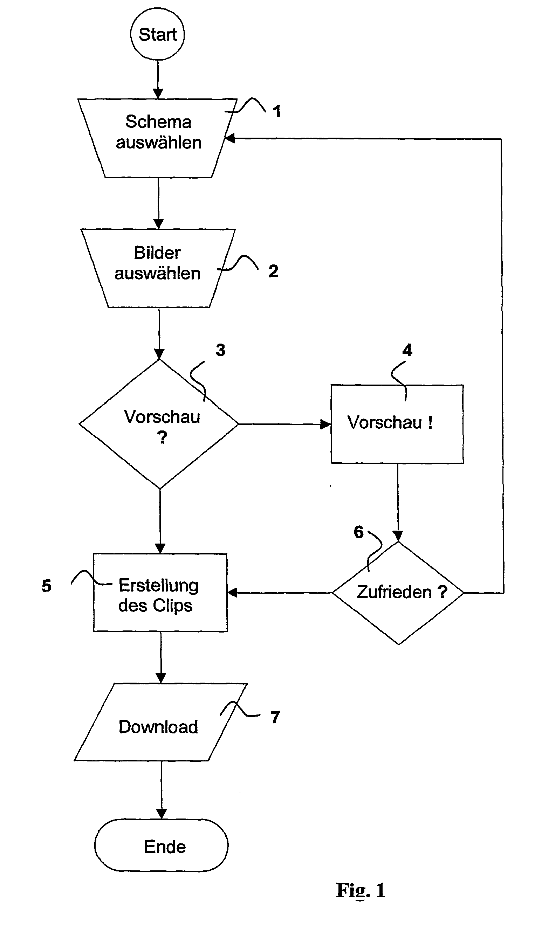

Fig. 1 zeigt einen vereinfachten Ablauf des erfindungsgemäßen Verfahrens. In diesem Fall stehen dem Anwender verschiedene Schemata z.B. für eine Bildfolge zur Verfügung, die bereits mit entsprechenden medientechnischen Übergängen ausgestattet sind. Der Anwender wählt in Schritt 1 ein entsprechendes Schema aus und in Schritt 2 die aus seiner Sicht dazu passenden Bilder. Das System baut daraus einen Zusammenschnitt auf und gibt dem Anwender in Schritt 3 die Möglichkeit, diesen Zusammenschnitt in einer Vorschau zu betrachten. Wird die Vorschau in Schritt 4 erstellt, kann der Anwender in Schritt 6 entscheiden, ob er mit dem Ergebnis zufrieden ist. Falls nicht gelangt er zurück zur Auswahl in Schritt 1, ansonsten wird - wie auch im Falle ohne Vorschau - der Clip oder Zusammenschnitt in Schritt 5 erstellt. AbSchließend kann der User in Schritt 7 den Clip downloaden oder darstellen.

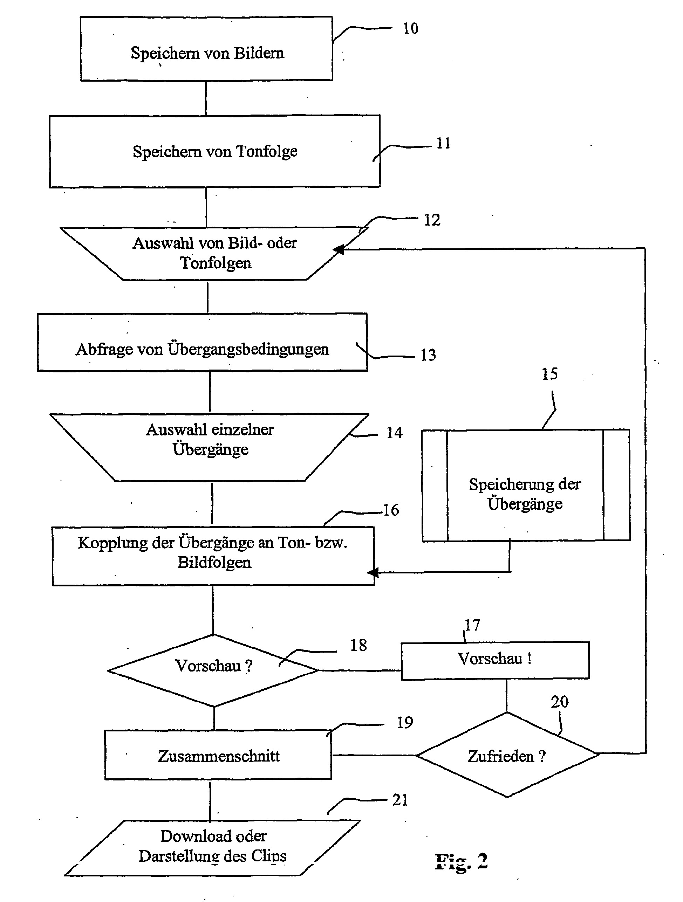

Bei der Ausgestaltung nach Fig. 2 sind zunächst oder werden Bilder (Schritt 10) und wenigstens eine Tonfolge (Schritt 11) gespeichert. Aus diesen gespeicherten Folgen kann der Anwender in Schritt 12 Bild- oder Tonfolgen auswählen. Das System fragt dann definierte oder vom Anwender zu definierende Übergangsbedingungen zur Erstellung von Übergängen zwischen den Bild- und/oder Tonfolgen in Schritt 13 ab. Der Anwender kann bedarfsweise in Schritt 14 nochmals gefragt werden, ob er einzelne Übergänge selbst auswählen möchte. Unter Verwendung der bestimmten Übergänge wird eine Kopplung der Bild- mit den Tonfolgen in Schritt 16 erstellt, wobei auf vorliegende medientechnische Übergänge wie die oben genannten gestalterischen Mittel in Schritt 15 zurückgegriffen wird. Diese liegen üblicherweise in vorgegebenen Abläufen vor, auf die der Anwender aber nach Wunsch auch Einfluss nehmen kann. Die Schritte 17 bis 21 entsprechen dann den Schritten 3 bis 7 der Fig. 1, wobei bei Unzufriedenheit ein Rückgriff auf Schritt 12 erfolgt.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

## Patentansprüche

1. Verfahren zur Erstellung eines Tonfolge gekoppelten Bildfolgeablaufs zur späteren Wiedergabe mittels eines Bild- und Tonwiedergabegeräts, bei dem in einer den Anwender führenden Form die für den Ablauf einer vertonten Bildfolge benötigten Tonfolgen und Bilder über eine Eingabeeinheit in eine Datenspeichereinheit eines entsprechenden Daten verarbeitenden Geräts eingegeben werden, wobei das Verfahren folgende Schritte umfasst:
a) Aufrufen eines geeigneten Softwareprogramms,
b) Speichern (10) einer Anzahl von Bildern in wenigstens einer Bilderdatei,
c) Speichern (11) von wenigstens einer Tonfolge in einer Tonfolgedatei,
d) Koppeln (16) der abgelegten Bilder und Tonfolgen in gewünschter Abfolge,
wobei durch eine in dem Softwareprogramm vorliegende, vorgegebene Ablaufsteuerung Bilder und Ton in einen Tonfolge gekoppelten Bildfolgeablauf überführt werden, indem der Anwender entweder
i) nach Auswahl einer zu vertonenden Bildfolge aus der Bilderdatei wenigstens eine Tonfolge aus der Tonfolgedatei auswählt, die der ausgewählten, zu vertonenden Bildfolge zugeordnet wird, oder
ii) nach Auswahl einer mit Bildern zu koppelnden Tonfolge aus der Tonfolgedatei eine Anzahl und Reihenfolge von Bildern aus der Bildfolgedatei auswählt, die der ausgewählten, mit Bildern zu koppelnden Tonfolge zugeordnet werden,
wobei in dem Softwareprogramm vorbestimmte oder vom Anwender zu definierende Bedingungen im Tonmaterial den Übergang von einem Bild zum nächsten bewirken,
e) Speichern (5, 19) des Tonfolge gekoppelten Bildfolgeablaufs, und
f) Bereitstellen des Tonfolge gekoppelten Bildfolgeablaufs zum Abruf (7, 21) durch das Bild- und Tonwiedergabegerät.

2. Verfahren nach Anspruch 1, **dadurch gekennzeichnet, dass** in Schritt d) i) mittels des Softwareprogramms ein Suchalgorithmus in Gang gesetzt wird, der nach vorgegebenen Suchkriterien zu wenigstens einer zu vertonenden Bildfolge wenigstens eine Tonfolge sucht.

3. Verfahren nach Anspruch 1, **dadurch gekennzeichnet, dass** in Schritt d) ii) mittels des Softwareprogramms ein Suchalgorithmus in Gang gesetzt wird, der nach vorgegebenen Suchkriterien zu wenigstens einer mit Bildern zu koppelnden Tonfolge wenigstens einen Bildersatz sucht.

4. Verfahren nach einem der Ansprüche 1 bis 3, **dadurch gekennzeichnet, dass** die Tonfolge vokal, instrumental oder elektronisch erzeugt ist.

5. Verfahren nach einem der Ansprüche 1 bis 4, **dadurch gekennzeichnet, dass** die Ablaufsteuerung zeitgesteuert oder durch die Erfassung der Änderung eines Charakteristikums der Tonfolge erfolgt.

6. Verfahren nach einem der Ansprüche 1 bis 5, **dadurch gekennzeichnet, dass** Suchkriterien, nach denen die zur Verfügung stehenden Tonfolgen für selektierbare Übergänge abgesucht werden, Parameter beinhalten, welche den Charakter des Tonmaterials nach objektiven Kriterien beschreiben.

7. Verfahren nach Anspruch 6, **dadurch gekennzeichnet, dass** die objektiven Kriterien Musikgattungen, Rhythmen, Tempi, dynamische Angaben, metrische Angaben oder Angaben zur Instrumentierung oder Tonhöhe sind.

8. Verfahren nach einem der vorhergehenden Ansprüche, **dadurch gekennzeichnet, dass** Sequenzen aus mehreren Tonfolgen einen Tonfolgenablauf bilden.

9. Verfahren nach einem der vorhergehenden Ansprüche, **dadurch gekennzeichnet, dass** ein Bildfolgeablauf aus einer Serie von Bildern erzeugt wird, wobei die ineinander überführten Bilder mit wenigstens zwei gestalterischen Mitteln bearbeitet werden, die in einem Ablaufschema, das in dem Softwareprogramm enthalten ist, charakterisiert sind.

10. Verfahren nach Anspruch 9, **dadurch gekennzeichnet, dass** das eine der wenigstens zwei gestalterischen Mittel die Zerlegung eines einzelnen Bildes in geometrische Figuren ist, so dass aus jedem Bild eine Bildserie entsteht, bestehend aus dem vollständigen Bild und Bildteilen, die beliebig oft nacheinander abgerufen werden können, und wobei das andere Mittel die Überführung eines Bildes in ein anderes mittels Animationseffekten ist.

11. Verfahren nach dem Anspruch 10, **dadurch gekennzeichnet, dass** die wenigstens zwei gestalterischen Mittel kombiniert eingesetzt werden.

12. Verfahren nach einem der vorhergehenden Ansprüche, **dadurch gekennzeichnet, dass** wenigstens ein Bildfolgeablaufschema festgelegt ist.

13. Verfahren nach einem der vorhergehenden Ansprüche, **dadurch gekennzeichnet, dass** wenigstens ein Tonfolgenablaufschema festgelegt ist.

14. Verfahren nach einem der vorhergehenden Ansprüche, **dadurch gekennzeichnet, dass** der Anwender mit Hilfe eines Menüs durch eine Zuordnungsfunktion ein Bildfolgeablaufschema einem Tonfolgenablaufschema zuordnet.

15. Verfahren nach einem der vorhergehenden Ansprüche, **dadurch gekennzeichnet, dass** die Bildaufnahme mittels digitaler Kamera, Videokamera oder geeignetem Mobiltelefon erfolgt.

16. Verfahren nach einem der vorhergehenden Ansprüche, **dadurch gekennzeichnet, dass** ein bereits erstellter Tonfolge gekoppelter Bildfolgeablauf mittels geeigneter Datenübertragungsmedien auf Wiedergabegeräte übertragbar ist, auf denen die Erstell- und Verarbeitungssoftware nicht vorliegt.

17. Auf einem Datenträger speicherbares Computerprogrammprodukt, **dadurch gekennzeichnet, dass** es das Verfahren nach einem der vorhergehenden Ansprüche umfasst.

## Claims

1. Method of creating an image sequence run coupled to an audio sequence for subsequent reproduction by an image and audio reproduction device, in which the audio sequences and images required to run an image sequence with sound are input into a data storage unit of a corresponding data processing device via an input unit, in a form which guides the user, wherein the method comprises the following steps:
a) selecting a suitable software program,
b) saving (10) a number of images in at least one image file,
c) saving (11) at least one audio sequence in an audio sequence file,
d) coupling (16) the stored images and audio sequences in the desired sequence,
a predetermined sequence controller which is provided in the software program converting images and audio into an image sequence run coupled to an audio sequence, in that the user either
i) selects an image sequence to be provided with audio from the image file, then selects at least one audio sequence from the audio sequence file, said audio sequence then being assigned to the selected image sequence to be provided with audio, or
ii) selects an audio sequence to be coupled to images from the audio sequence file, then selects a number and sequence of images from the image sequence file, said images then being assigned to the selected audio sequence to be coupled with images,
conditions in the audio material, which are predetermined in the software program or are to be defined by the user, initiating the transition from one image to the next,
e) saving (5, 19) the image sequence run coupled to the audio sequence, and
f) making the image sequence run, coupled to the audio sequence, available to be retrieved (7, 21) by the image and audio reproduction device.

2. Method according to claim 1, **characterised in that** in step d) i), a search algorithm is implemented by the software program and searches for at least one audio sequence, for at least one image sequence to be provided with audio, according to predetermined search criteria.

3. Method according to claim 1, **characterised in that** in step d) ii), a search algorithm is implemented by the software program and searches for at least one image set, for at least one audio sequence to be coupled to images, according to predetermined search criteria.

4. Method according to any one of claims 1 to 3, **characterised in that** the audio sequence is produced vocally, instrumentally or electronically.

5. Method according to any one of claims 1 to 4, **characterised in that** the sequence control process is carried out in a time-controlled manner or by detecting the change in a characteristic of the audio sequence.

6. Method according to any one of claims 1 to 5, **characterised in that** search criteria, according to which the available audio sequences for selectable transitions are searched for, contain parameters which describe the nature of the audio material according to objective criteria.

7. Method according to claim 6, **characterised in that** the objective criteria are musical genres, rhythms, tempos, dynamic indications, metronome marks or specifications relating to the instrumentation or pitch.

8. Method according to any one of the preceding claims, **characterised in that** sequences of a plurality of audio sequences form an audio sequence run.

9. Method according to any one of the preceding claims, **characterised in that** an image sequence run is produced from a series of images, said images, which transition into one another, being processed by at least two creative means, the characteristics of which are determined in a sequence model which is contained in the software program.

10. Method according to claim 9, **characterised in that** one of the at least two creative means breaks an individual image down into geometric shapes, in such a way that every image results in an image series consisting of the complete image and image components, which may be retrieved one after another as often as desired, the other means transitioning one image into another by means of animation effects.

11. Method according to claim 10, **characterised in that** the at least two creative means are used in combination.

12. Method according to any one of the preceding claims, **characterised in that** at least one image sequence model is determined.

13. Method according to any one of the preceding claims, **characterised in that** at least one audio sequence model is determined.

14. Method according to any one of the preceding claims, **characterised in that** the user assigns an image sequence model to an audio sequence model using an assignment function, by means of a menu.

15. Method according to any one of the preceding claims, **characterised in that** the images are taken with a digital camera, a video camera or a suitable mobile telephone.

16. Method according to any one of the preceding claims, **characterised in that** a previously created image sequence, coupled to an audio sequence run, can be transferred onto reproduction devices on which the creation and processing software is not present, via suitable data transfer means.

17. Computer program product which can be stored on a data carrier, **characterised in that** it comprises the method according to any one of the preceding claims.

## Revendications

1. Procédé pour créer un déroulement de succession d'images couplé à une succession de sons pour la restitution ultérieure au moyen d'un appareil de restitution d'images et de sons, dans lequel les successions de sons et les images nécessaires au déroulement d'une succession d'images sonorisée sont entrées sous une forme guidant l'utilisateur par l'intermédiaire d'une unité d'entrée dans une unité de stockage de données d'un appareil traitant les données correspondantes, le procédé comprenant les étapes suivantes :
a) appel d'un programme de logiciel approprié,
b) stockage (10) d'un certain nombre d'images dans au moins un fichier d'images,
c) stockage (11) d'au moins une succession de sons dans un fichier de successions de sons,
d) couplage (16) des images et des successions de sons déposées en une suite souhaitée,
des images et des sons étant transformés en un déroulement de succession d'images couplé à une succession de sons par une commande de déroulement donnée, présente dans le programme de logiciel, tandis que l'utilisateur, soit,
i) après sélection d'une succession d'images à sonoriser dans le fichier d'images, sélectionne au moins une succession de sons parmi le fichier de successions de sons, qui est associée à la succession d'images à sonoriser sélectionnée, soit,
ii) après sélection d'une succession de sons à coupler avec des images dans le fichier de successions de sons, sélectionne un certain nombre et un ordre d'images parmi le fichier de successions d'images, qui sont associés à la succession de sons sélectionnée devant être couplée a des images,
des conditions prédéterminées dans le programme de logiciel ou à définir par l'utilisateur dans les données sonores déclenchant le passage d'une image à une image suivante,
e) stockage (5, 19) du déroulement de succession d'images couplé à une succession de sons, et
f) mise à disposition du déroulement de succession d'images couplé à une succession de sons pour appel (7, 21) par l'appareil de restitution d'images et de sons.

2. Procédé selon la revendication 1, **caractérisé en ce qu'**à l'étape d) i), un algorithme de recherche est activé au moyen du programme de logiciel qui recherche selon des critères de recherche donnés au moins une succession de sons pour au moins une succession d'images à sonoriser.

3. Procédé selon la revendication 1, **caractérisé en ce qu'**à l'étape d) ii), un algorithme de recherche est activé par le programme de logiciel qui recherche selon des critères donnés au moins un ensemble d'images pour au moins une succession de sons à coupler à des images.

4. Procédé selon une des revendications 1 à 3, **caractérisé en ce que** la succession de sons est générée de manière vocale, instrumentale ou électronique.

5. Procédé selon une des revendications 1 à 4, **caractérisé en ce que** la commande de déroulement s'effectue temporellement ou par détection d'une modification d'une caractéristique de la succession de sons.

6. Procédé selon une des revendications 1 à 5, **caractérisé en ce que** des critères de recherche selon lesquels sont recherchées les successions de sons disponibles pour des transitions sélectionnables comportent des paramètres qui décrivent le caractère des données sonores selon des critères objectifs.

7. Procédé selon la revendication 6, **caractérisé en ce que** les critères objectifs sont les genres musicaux, les rythmes, les tempos, les indications dynamiques ou métriques ou les indications concernant l'orchestration ou la hauteur du son.

8. Procédé selon une des revendications précédentes, **caractérisé en ce que** des séquences de plusieurs successions de sons forment un déroulement de succession de sons.

9. Procédé selon une des revendications précédentes, **caractérisé en ce qu'**un déroulement de succession d'images est généré à partir d'une série d'images, les images fondues les unes dans les autres étant traitées avec au minimum deux moyens d'arrangement qui sont **caractérisés** dans un schéma de déroulement contenu dans le programme de logiciel.

10. Procédé selon la revendication 9, **caractérisé en ce que** l'un des au moins deux moyens d'arrangement est de décomposer une image individuelle en figures géométriques de manière à former à partir de chaque image une série d'images constituée de l'image complète et d'éléments d'image qui peuvent être appelés aussi souvent qu'on le souhaite, et l'autre moyen étant de fondre une image dans une autre au moyen d'effets d'animation.

11. Procédé selon la revendication 10, **caractérisé en ce que** les au moins deux moyens d'arrangement sont utilisés en combinaison.

12. Procédé selon une des revendications précédentes, **caractérisé en ce qu'**au moins un schéma de déroulement de succession d'images est défini.

13. Procédé selon une des revendications précédentes, **caractérisé en ce qu'**au moins un schéma de déroulement de succession de sons est défini.

14. Procédé selon une des revendications précédentes, **caractérisé en ce que** l'utilisateur associe à l'aide d'un menu, par une fonction d'affectation, un schéma de déroulement de succession d'images à un schéma de déroulement de succession de sons.

15. Procédé selon une des revendications précédentes, **caractérisé en ce que** la prise de vues s'effectue au moyen d'un appareil photo numérique, d'une caméra vidéo ou d'un téléphone portable approprié.

16. Procédé selon une des revendications précédentes, **caractérisé en ce qu'**un déroulement de succession d'images couplé à une succession de sons déjà produit peut être transmise par des moyens de transmission de données appropriés à des appareils de restitution qui ne disposent pas du logiciel de production et de traitement.

17. Programme informatique pouvant être stocké sur un support de données, **caractérisé en ce qu'**il comprend le procédé selon une des revendications précédentes.
